(19) Europäisches Patentamt
European Patent Office
Office européen des brevets

(11) Veröffentlichungsnummer: **0 283 712**
**A1**

# (12) EUROPÄISCHE PATENTANMELDUNG

(21) Anmeldenummer: **88102313.9**

(51) Int. Cl.⁴: **B01D 53/34**

(22) Anmeldetag: **18.02.88**

(30) Priorität: **01.03.87 DE 3706619**

(43) Veröffentlichungstag der Anmeldung: **28.09.88 Patentblatt 88/39**

(84) Benannte Vertragsstaaten: **BE DE ES FR GB IT NL**

(71) Anmelder: **BAYER DO BRASIL S.A.**
**Caixa Postal 22523**
**04798 Sao Paulo/S.P.(BR)**

(72) Erfinder: **Bruening, Wilhelm, Dr.**
**22231 Rua Pres. Carlos de Campos No. 115**
**boco 2**
**apto. 1004 Laranjeiras Rio de Janeiro(BR)**
Erfinder: **Uchdorf, Rudolf, Dipl.-Ing.**
**Flensburger Zeile 1 H**
**D-4150 Krefeld 11(DE)**
Erfinder: **Mitschker, Alfred, Dr.**
**Am Gartenfeld 50**
**D-5068 Odenthal(DE)**

(74) Vertreter: **Steiling, Lothar, Dr. et al**
**c/o Bayer AG Konzernverwaltung RP Patente Konzern**
**D-5090 Leverkusen 1 Bayerwerk(DE)**

## (54) Verfahren zur Entfernung von schwefelhaltigen Gasen.

(57) Die vorliegende Erfindung betrifft ein Verfahren zur selektiven Entfernung schwefelhaltiger Gase asu technischen Gasen oder Abgasen durch Behandlung mit basischen Substanzen.

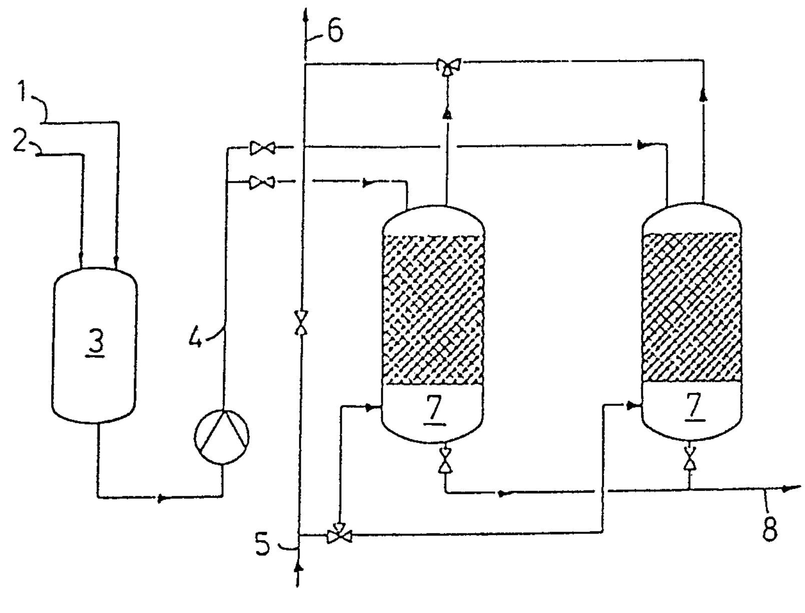


FIG. 1

EP 0 283 712 A1

Xerox Copy Centre

## Verfahren zur Entfernung von schwefelhaltigen Gasen

Die vorliegende Erfindung betrifft ein Verfahren zur selektiven Entfernung schwefelhaltiger Gase aus technschen Gasen oder Abgasen durch Behandlung mit basischen Substanzen.

Verfahren zur Entfernung von schwefelhaltigen Gasen aus technischen Gasen oder Abgasen sind bereits bekannt. So beschreibt die DE-A 3 004 757 die Entfernung von Schwefelwasserstoff aus technischen Gasen mittels wäßriger Lösungen von Alkalimetallhydroxiden. Gemäß den DE-A 3 236 600 und De-A 3 236 601 erfolgt die Entfernung von Kohlendioxid und Schwefelwasserstoff aus technischen Gasmischungen mittels einer Wäsche mit einer wäßrigen Lösung von Methyldiethanolamin. Auch die DE-A 3 027 220 befaßt sich mit der Entfernung von Schwefelwasserstoff aus technischen Gasen mit wäßrigen Alkalilösungen.

Ferner sind aus den DE-A 3 427 133 und DE-A 3 427 134 sowie der EP-A 173 908 Verfahren zum Entfernen von $CO_2$ und/oder $H_2S$ bekannt, in denen die Entfernung in Alkanolamin enthaltenden Absorptionsflüssigkeiten durchgeführt wird. Gemäß der DE-A 3 429 979 geschieht die Entfernung der sauren und/oder schwefelhaltigen Gase in Basen enthaltenden wäßrigen Lösungen in Gegenwart eines, eingebaute tertiäre oder quarternäre Stickstoffatome aufweisenden basischen Ionenaustauschers.

Unter besonderen Gegebenheiten kann es das Ziel sein, ausschließlich schwefelhaltige Gase aus Gasgemischen zu entfernen. Die Aufgabe des vorliegenden Erfindung ist die Bereitstellung eines solchen Verfahrens.

Es wurde nunmehr ein Verfahren zur selektiven Entfernung von schwefelhaltigen Gasen gefunden, welches in überraschend einfacher Weise durchführbar ist und darüber hinaus sehr gute Resultate bringt. Bei diesem Verfahren werden als basische Substanzen Tertiäre Amingruppen enthaltende Trägermaterialien eingesetzt.

Gegenstand der vorliegenden Erfindung ist ein Verfahren zur selektiven Entfernung schwefelhaltiger Gase aus technischen Gasen oder Abgasen durch Behandlung der Gase mit basischen Substanzen, dadurch gekennzeichnet, daß die basischen Substanzen Trägermaterialien sind, die tertiäre Aminogruppen der allgemeinen Formel

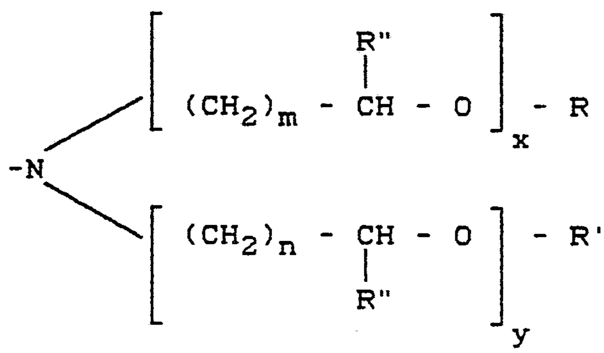

aufweisen, wobei
m und n jeweils Werte von 1 oder 2
x und y jeweils Werte von 1 bis 10, bevorzugt 1 bis 2
annehmen können, und
R und R′ Wasserstoff oder Alkyl und
R″ Wasserstoff oder Methyl sind.

Als Trägermaterialien im Sinne dieser Erfindung sind sowohl anorganische als auch organische Substanzen geeignet. Eine bevorzugte Verfahrensvariante des erfindungsgemäßen Verfahrens besteht darin, daß die Trägermaterialien Polymerisationsharze sind. Dies können Copolymere aus polymerisierbaren Vinylverbindungen sein, die entweder im Molekül selbst oder nach entsprechender Funktionalisierung die erfindungsgemäßen tertiären Aminogruppen aufweisen.

Mit Polyvinylverbindungen vernetzte Polymerisationsharze sind besonders geeignet. Als Monovinylverbindungen sollen stellvertretend Styrol, Chlorstyrole, Alkylstyrole, Chlormethylstyrole, (Meth)acrylate ($C_1$ - $C_6$), (Meth)acrylamide bzw. (Meth)acrylamide auf Basis Polyamin, Glycidylmethacrylat und Vinylglycidylether genannt sein. Als Polyvinylverbindungen kommen beispielsweise DVB, TVB, Ethylenglykoldimethacrylat. Methylenbiscarylamid. Divinylethylenharnstoff, Octadien 1,7, Hexadien 1,5 und Triallylcyanurat zum Einsatz. Die Funktionalisierung zu den beanspruchten Harzen erfolgt nach an sich bekannten Verfahren.

Ionenaustauscher bzw. deren Vorprodukte der genannten Art sind bekannt. Sie und ihre Herstellung werden z. B. beschrieben in F. Helfferich, Ionenaustauscher, Band 1, 1959, Seiten 10 bis 106 und Ullmanns Enzyklopädie der techn. Chemie, 4. Aufl., Band 13, 1977, Seiten 292 bis 309. Zur Funktionalisierung können auch Polyamine wie z. B. Triethylentetramin oder geeignete Hydrazin-Abkömmlinge eingesetzt werden.

Weitere bevorzugte Trägermaterialien stellen Kondensationsharze dar, die die erfindungsgemäßen tertiären Aminogruppen aufweisen.

Die Herstellung derartiger Harze ist bekannt. Man erhält sie beispielsweise durch Umsetzung von aliphatischen und/oder aromatischen Aminen mit Epichlorhydrin bzw. Formaldehyd. Als aliphatische Amine seien beispielsweise Polyalkylenpolyamine genannt, wie Diethylentriamin, Triethylentetramin, als aromatisches Amin beispielsweise m-Phenylendiamin.

Die erfindungsgemäßen Ethanolamin-bzw. Propanolamingruppen können vorteilhaft durch Umsetzung der entsprechenden Harze mit Ethylenoxid bzw. Propylenoxid erhalten werden.

Das erfindungsgemäße Verfahren eignet sich für die Entfernung von schwefelhaltigen Gasen. Dies sind im Rahmen dieser Erfindung insbesondere Schwefelwasserstoff, Schwefelkohlenstoff, Kohlenoxisulfid und Schwefeldioxid.

Gemäß einer besonders bevorzugten Ausführungsform des erfindungsgemäßen Verfahrens ist das -schwefelhaltige Gas $SO_2$. Durch die Anwendung des erfindungsgemäßen Verfahrens können die -schwefelhaltigen Gase selektiv von anderen Gasen getrennt werden. So ist es möglich, schwefelhaltige Gase aus Gasen mit hohem $CO_2$-Gehalt zu entfernen.

Anwendungsfälle liegen bei der Entschwefelung von Hausbrand, bei der Entfernung von $SO_2$ bei dem Clauß-Prozeß, bei der Abgasentschwefelung von Kraftwerken, Schwefelsäureanlagen, Raffinerien und Kalzinierprozessen.

Beim erfindungsgemäßen Verfahren werden die zu behandelnden Gase bzw. Abgase mit den erfindungsgemäßen Trägermaterialien in Kontakt gebracht. Da die zu reinigenden Gase im allgemeinen genügend Feuchte enthalten, können die erfindungsgemäßen Trägermaterialien als solche ohne weitere Vorbehandlung mit ihrem jeweiligen Wassergehalt eingesetzt werden, d. h. nicht in einer wäßrigen Umgebung wie bei den bekannten Verfahren Im Falle zu trockener Gase genügt es, diese nach bekannten Verfahren zu befeuchten oder auch die Kontaktschicht selbst mit Wasser zu besprühen.

Die Menge der zum Einsatz Trägermaterialien richtet sich nach der Konzentration der schwefelhaltigen Gase in den zu behandelnden technischen Gasen. Die Menge der Trägermaterialien beträgt 5 bis 500 ℓ, bevorzugt 10 bis 50 ℓ, pro $Nm^3/h$ zu behandelndes Gas. Auch höhere oder niedrigere Mengen der Trägermaterialien können im Prinzip eingesetzt werden.

Die Entfernung der schwefelhaltigen Gase wird bevorzugt bei Raumtemperatur (ca. 10 bis 30°C) vorgenommen. Bis zur vollständigen Sättigung des Harzes dauert es unter den beschriebenen Bedingungen zwei bis sieben Tage. Eine besonders bevorzugte Ausführungsform des erfindungsgemäßen Verfahrens besteht darin, daß die Trägermaterialien nach ihrer Sättigung regeneriert werden.

Je nach den entsprechenden Gegebenheiten ist die Durchführung der Regenerierung vorteilhaft nach den drei im folgenden erläuterten Verfahren durchführbar. Eine bevorzugtes Verfahren ist dadurch gekennzeichnet, daß die Regenerierung bei Raumtemperatur durch

a) Behandlung der Trägermaterialien mit HCl und anschließende Entfernung der nicht verbrauchten HCl durch Waschen mit Wasser

b) sowie die Aktivierung mit Natronlauge vorgenommen wird, wobei die überschüssige Natronlauge anschließend mit Wasser entfernt wird.

Die dabei eingesetzte HCl hat bevorzugt eine Konzentration von 3 bis 10 %, aber auch beim Einsatz von 36 %iger HCl treten im allgemeinen keine Schädigungen an den Trägermaterialien auf. Die Reaktivierung wird mit Natronlauge einer Konzentration von 3 bis 50 %, bevorzugt 5 bis 10 %, vorgenommen.

In den beiden alternativen, im folgenden beschriebenen Verfahren geschieht die Regenerierung bei erhöhter Temperatur mit Natronlauge oder Wasserdampf. Es werden hierbei also keine zusätzlichen Chloride erzeugt. Die Regenerierung mit Natronlauge wird dabei bei Temperaturen zwischen 120 und 200°C, bevorzugt 130 bis 160°C, vorgenommen. Die Natronlauge weist bevorzugt eine Konzentration im Bereich von 5 bis 30 % auf.

Wird die Regenerierung mit Wasserdampf vorgenommen, sind Temperaturen zwischen 180 und 235°C

bevorzugt. Der Druck des Wasserdampfes liegt zwischen 9 und 30 bar.

In Fig. 1 ist eine Möglichkeit zur Durchführung des erfindungsgemäßen Verfahrens dargestellt. In dieser Zeichnung bedeuten:

(1) NaOH
(2) $H_2O$
(3) Regeneriermittelvorlage
(4) Regeneriermittelstrom
(5) zu reinigendes Gas
(6) gereinigtes Gas
(7) Absorptionstürme
(8) verbrauchtes Regeneriermittel

Das zu reinigende Gas (5) wird durch jeweils einen von zwei mit Trägermaterialien gefüllten Absorptionstürmen (7) geleitet und verläßt diesen als gereinigtes Gas (6). Natronlauge (1) und Wasser (2) werden in der Regeneriermittelvorlage (3) gemischt. Der Regeneriermittelstrom (4) wird jeweils durch den Absorptionsturm (7) geleitet, in dem die Trägermaterialien bereits gesättigt sind. Das verbrauchte Regeneriermittel (8) wird dem System entnommen und kann dann aufbereitet werden.

Das über die Leitung (6) dem System entnommene gereinigte Gas weist einen im Vergleich zum ungereinigten Gas stark verminderten Gehalt an schwefelhaltigen Verunreinigungen auf. So ist es beispielsweise möglich, den Schwefelgehalt von $CO_2$/$SO_2$-Gasgemischen mit einer $SO_2$-Konzentration zwischen 2.500 und 13.500 ppm fast quantitativ (> 98 %) zu senken.

Die Durchführung des erfindungsgemäßen Verfahrens ist selbstverständlich nicht auf die zwingende Verwendung der lediglich beispielhaften Vorrichtung gemäß Zeichnung angewiesen.

Die nachfolgenden Beispiele dienen der weiteren Erläuterung des erfindungsgemäßen Verfahrens, ohne dieses zu beschränken.

Beispiel 1

Herstellung des Ionenaustauschers

Ein Styrol/Divinylbenzol-Copolymerharz, welches mit Aminobenzylgruppen ausgerüstet ist, (Typ MP 64 ZII) wurde mit 2,2 Mol Ethylenoxid umgesetzt.

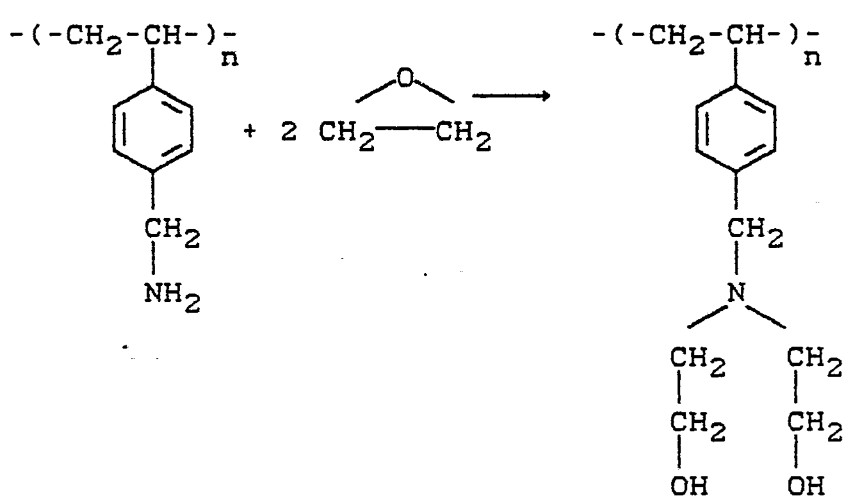

Die Umsetzung erfolgte bei 80°C im wäßrigen Medium, ohne Katalysator und unter Einsatz eines 10%igen Ethylenoxid-Überschusses. Sie verlief - laut IR-Spektren - quantitativ.

Das fertige Harz zeichnete sich, im Gegensatz zum Vorprodukt (Amingeruch) durch absolute Geruchlosigkeit aus. Während das Vorprodukt bei Temperaturen von ca. 120°C deutlich dunkler wurde, bewahrte das Endprodukt seine ursprünglich helle Farbe. Beide Eigenschaften sind das Resultat der guten chemischen Beständigkeit der funktionellen N,N-bis-(β-hydroxyethyl)-benzylamino-Gruppe.

Beispiel 2

Adsorption von $SO_2$ aus $CO_2$

Es wurden 100 ml des nach Beispiel 1 hergestellten feuchten Harzes in ein als Reaktor ausgelegtes Edelstahlrohr gefüllt. Die Gasmischung $CO_2/SO_2$ wurde in einer 60 l Druckflasche hergestellt, wobei eine Konzentration von 1000 -1500 ppm eingestellt wurde. Die analytische Kontrolle erfolgte durch iodometrische Titration mittels Mettler-Memotitrator. Die Beaufschlagung des Harzes aus der Druckflasche mit 40 l/Stunde erfolgte über Rotameter.

Zwecks Kontrolle der Wirksamkeit des Harzes wurde das aus dem Reaktor austretende Gas durch eine Jod/Kaliumjodid-Lösung geleitet, die in gewissen Zeitabständen durch Titration auf ihren Gehalt überprüft wurde.

Das Resultat des Versuches ist in der Figur 2 graphisch dargestellt. Dabei wurde die relative $SO_2$-Adsorption des Harzes auf ein Volumen von 1000 ml bezogen und gegen die in der beaufschlagten Gasmischung enthaltenen $SO_2$-Menge (Mol) aufgetragen.

Die Kurve zeigt, daß zunächst praktisch eine quantitative $SO_2$-Adsorption erfolgt, und bei 1,85 Mol der Durchschlag des $SO_2$ beginnt. Der rasche Abfall von nahezu 100% bei 1,85 Mol auf Null bei 2,4 Mol verdeutlicht den hohen Wirkungsgrad des Harzes.

Damit absorbierte das Harz bis zum Durchburch, 118,4 g $SO_2$, entsprechend ca. 17% seines Eigengewichtes (1 Liter = 0,7 kg).

Das mit $SO_2$ gesättigte Harz läßt sich hervorragend mit 5 Bettvolumen 4 %iger Natronlauge bei Raumtemperatur regenerieren.

Das auf diesem Wege regenerierte Harz zeigte bei erneuter Beladung die gleichen Adsorptionseigenschaften wie das frisch hergestellte Harz.

Beispiel 3

In der in Beispiel 2 beschriebenen Versuchsanordnung wurden durch 500 ml des nach Beispiel 1 hergestellten harzes die in Tabelle 1 aufgeführten Gasmischungen geleitet.

Tabelle 1

| Dauer [h] | $CO_2$-Strom [l/h] | ppm $SO_2$ |
|---|---|---|
| 31 | 42 | 2500 |
| 41 | 36 | 3600 |
| 27 | 42-56 | 5300 |
| 16 | 42 | 13500 |

Innerhalb der letzten 2 Stunden der Beaufschlagung ging die Adsorption von über 98 % des angebotenen $SO_2$ auf 0 % zurück. Damit wurden bei dieser Versuchsdurchführung ca. 1,50 Mol $SO_2$ pro Liter Harz adsorbiert. Die Regenerierung erfolgt mit 5 Bettvolumen 4 %iger NaOH.

## Ansprüche

1. Verfahren zur selektiven Entfernung schwefelhaltiger Gase aus technischen Gasen oder Abgasen durch Behandlung der Gase mit basischen Substanzen, dadurch gekennzeichnet, daß die basischen Substanzen Trägermaterialien sind, die tertiäre Aminogruppen der allgemeinen Formel

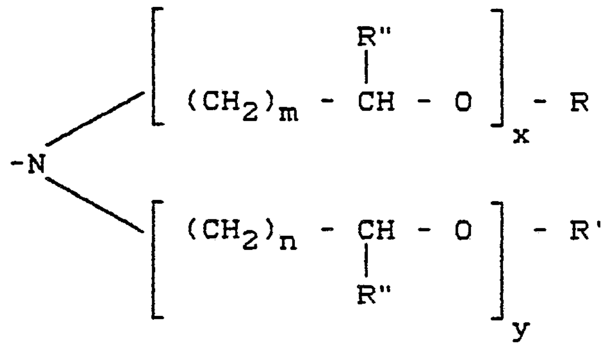

aufweisen, wobei
m und n jeweils Werte von 1 oder 2
x und y jeweils Werte von 0 bis 10, bevorzugt 0 bis 2
annehmen können, und
R und R′ Wasserstoff oder Alkyl und
R″ Wasserstoff oder Methyl sind.

2. Verfahren gemäß Anspruch 1, dadurch gekennzeichnet, daß die Trägerharze Polymerisationsharze sind.

3. Verfahren gemäß Anspruch 1, dadurch gekennzeichnet, daß die Trägerharze Kondensationsharze sind.

4. Verfahren gemäß einem der Ansprüche 1 bis 3, dadurch gekennzeichnet, daß das schwefelhaltige Gas $SO_2$ ist.

5. Verfahren gemäß einem oder mehrerer der Ansprüche 1 bis 4, dadurch gekennzeichnet, daß die Menge der Trägermaterialien 5 bis 500 ℓ, bevorzugt 10 bis 50 l pro $Nm^3/h$ zu behandelndes Gas beträgt.

6. Verfahren gemäß einem oder mehrerer der Ansprüche 1 bis , dadurch gekennzeichnet, daß die Entfernung bei Raumtemperatur vorgenommen wird.

7. Verfahren gemäß einem oder mehrerer der Ansprüche 1 bis 6, dadurch gekennzeichnet, daß die Trägermaterialien nach ihrer Sättigung regeneriert werden.

8. Verfahren gemäß Anspruch 7, dadurch gekennzeichnet, daß die Regenerierung bei Raumtemperatur durch

a) Behandlung der Trägermaterialien mit HCl und anschließende Entfernung der nicht verbrauchten HCl durch Waschen mit Wasser

b) sowie die Aktivierung mit Natronlauge vorgenommen wird, wobei die überschüssige Natronlauge anschließend mit Wasser entfernt wird.

9. Verfahren gemäß Anspruch 7, dadurch gekennzeichnet, daß die Regenerierung mit Natronlauge bei Temperaturen zwischen 120 und 200°C, bevorzugt 130 -160°C, vorgenommen wird.

10. Verfahren gemäß Anspruch 7, dadurch gekennzeichnet, daß die Regenerierung mit Wasserdampf bei Temperaturen zwischen 180 und 240°C vorgenommen wird.

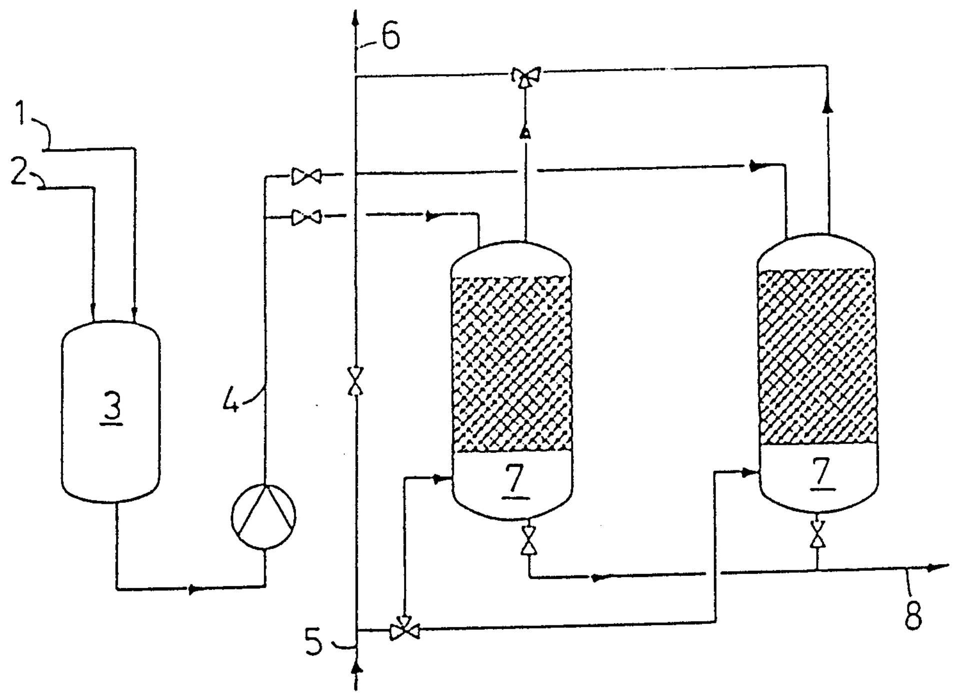


FIG. 1

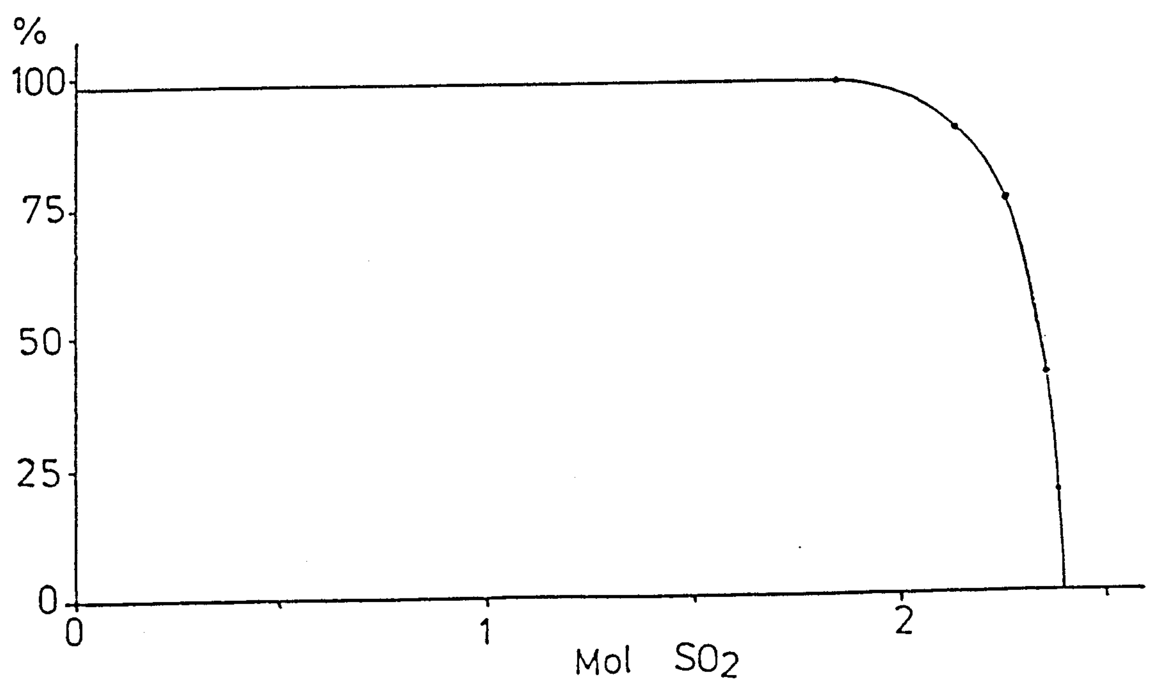


FIG. 2

Europäisches Patentamt

# EUROPÄISCHER RECHERCHENBERICHT

Nummer der Anmeldung

EP 88 10 2313

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 533 103 (UNION CARBIDE CORP.)<br>* Ansprüche 1-4,7 *<br>--- | 1-4,6,9 | B 01 D 53/34 |
| A | DE-A-2 453 549 (H. RIEMER)<br>* Ansprüche 1,2; Seite 4, Zeilen 3-12 *<br>--- | 1,2,5-7,9 | |
| A | US-A-2 962 344 (H.H. KURMEIER)<br>* vollständiges Dokument *<br>--- | 1,4 | |
| A | INDUSTRIAL ENGINEERING CHEMISTRY PROD. RES. DEVELOP., Band 12, Nr. 4, 1973, Seiten 288-293; A.S. VAIDYANATHAN et al.: "Sorption of sulfur dioxide, hydrogen sulfide, and nitrogen dioxide by ion-exchange resins"<br>* Seiten 288-291 *<br>----- | 1,3,4 | |

RECHERCHIERTE SACHGEBIETE (Int. Cl.4)

B 01 D 53/00

Der vorliegende Recherchenbericht wurde für alle Patentansprüche erstellt

| Recherchenort | Abschlußdatum der Recherche | Prüfer |
|---|---|---|
| BERLIN | 27-06-1988 | BERTRAM H E H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)